**Europäisches Patentamt**

**European Patent Office**

**Office européen des brevets**

(19)

(11) Veröffentlichungsnummer : **0 245 246**
**B1**

(12) **EUROPÄISCHE PATENTSCHRIFT**

(45) Veröffentlichungstag der Patentschrift :
**14.02.90**

(21) Anmeldenummer : **85905792.9**

(22) Anmeldetag : **23.10.85**

(86) Internationale Anmeldenummer :
**PCT/EP 85/00559**

(87) Internationale Veröffentlichungsnummer :
**WO/8604212 (31.07.86 Gazette 86/17)**

(51) Int. Cl.⁵ : **A 01 G 25/16**

(54) **EINRICHTUNG ZUR STEUERUNG DER WASSERZUFUHR VON PFLANZEN.**

(30) Priorität : **18.01.85 AT 114/85**

(43) Veröffentlichungstag der Anmeldung :
**19.11.87 Patentblatt 87/47**

(45) Bekanntmachung des Hinweises auf die Patenterteilung : **14.02.90 Patentblatt 90/07**

(84) Benannte Vertragsstaaten :
**AT CH DE FR IT LI**

(56) Entgegenhaltungen :
**FR—A— 2 201 029**
**US—A— 2 946 512**
**US—A— 3 426 539**
**US—A— 3 642 204**

(73) Patentinhaber : **IPACO, International Patent and
Construction Company, reg.Trust
Altenbachstrasse 8
FL-9490 Vaduz (LI)**

(72) Erfinder : **WENINGER, Roland
Saglstrasse 70
A-6410 Telfs (AT)**

(74) Vertreter : **Hofinger, Engelbert et al
Torggler-Hofinger Wilhelm-Greil-Strasse 16
A-6020 Innsbruck (AT)**

## Beschreibung

Die Erfindung betrifft eine Bewässerungseinrichtung für Pflanzen, mit einem in die Erde einzusetzenden, eine Füllöffnung für Wasser aufweisenden, wasserdurchlässigen Unterteil, der einen porösen Hohlkörper umfaßt, mit einem luftundurchlässigen Oberteil, der durch eine vom Unterteil abnehmbare, luftdichte Abdeckung der Füllöffnung gebildet ist, und der ein in Abhängigkeit vom Wassergehalt der Erde arbeitender Ventilkörper sowie eine Steuermembran enthält, die zwischen Ringen dichtend geklemmt ist, wobei sich zwischen dem von der Steuermembran beaufschlagten Ventilkörper, der im Oberteil geführt ist, und einem mit dem Oberteil verbundenen Widerlager der Durchflußquerschnitt einer Bewässerungsleitung vergrößert, wenn Wasser aus dem Unterteil in die Erde austritt, und verkleinert, wenn Wasser aus der Erde in den Unterteil eintritt.

Eine derartige Einrichtung ist beispielsweise der US-A-28 63 698 zu entnehmen. Diese zeigt eine Einrichtung, bei der gegebenenfalls das in die Erde zuzuführende Wasser durch den Oberteil fließt, in dem insgesamt vier im wesentlichen flache Ventilmembranen nacheinander zwischen Ringen geklemmt sind. Je nach den Druckverhältnissen im porösen Hohlkörper werden die einzelnen Ventile betätigt, wobei das durch die Einrichtung strömende Wasser als Steuerflüssigkeit, als Verdrängerflüssigkeit für eintretende bzw. im Wasser enthaltene Luft, und auch als Reinigungsflüssigkeit verwendet wird, um eine Langzeitverwendung zu ermöglichen. Da mehrere Ventile notwendig sind, weil die Ventilmembranen direkt mit Wasser in Berührung kommen, weist sie einen verhältnismäßig aufwendigen Aufbau auf.

Eine sehr ähnliche Einrichtung ist der FR-A-2.201.029 zu entnehmen. In die Erde wird ein wassergefülltes Rohr eingesetzt, das an einer Seite durch einen porösen Körper verschlossen ist. An diesen ist ein eine Steuermembran und das Sperrventil für die Bewässerungsleitung aufweisender Oberteil angeschraubt. Der Ventilkörper des Sperrventiles beaufschlagt auch hier eine flach eingespannte Ventilmembran, die eine Wasseraustrittsöffnung im Oberteil sperrt bzw. öffnet, wobei auch hier das der Erde zuzuführende Wasser direkt durch den Oberteil fließt.

Eine weitere ähnliche Einrichtung beschreibt die AT-B-339 651, die ein in die Erde steckbares, unten mit einer Keramikzelle und oben mit einer federbeaufschlagten Membran verschlossenes, teilweise wassergefülltes Rohr aufweist, wobei der Membran ein Vakuumschalter zugeordnet ist, der elektrische Kontakte einer Bewässerungseinrichtung öffnet bzw. schließt.

Aus der DE-A-27 39 650 ist die Quetschung des Bewässerungsschlauches durch einen Quellkörper bekannt. Da erst der aufgequollene Körper den Schlauch quetschen kann, ist der Quellkörper vor Verwendung ausreichend zu wässern und seine Quellung sicherzustellen, sodaß die Bewässerungseinrichtung nicht unmittelbar nach dem Kauf in Betrieb genommen werden kann. Des weiteren wird das vom Quellkörper aufgenommene Wasser großteils an die Luft abgegeben, wodurch zwar die Luftfeuchtigkeit in die Ventilsteuerung einbezogen wird, die mit dem Wasser in den Quellkörper eindringenden gelösten und ungelösten Stoffe jedoch bei Verdunstung des Wassers im Quellkörper abgeschieden werden müssen. Dies führt zwangsläufig zum Verschluß der Poren des Quellkörpers.

Ebenfalls mit Quellkörpern arbeiten die Einrichtungen nach der US-A-3,426,539 und nach der EP-A-4 159, die vollständig in die Erde eingegraben werden. Der Quellkörper liegt entweder frei oder ist mit einer großporigen Membran, einem Gitter od. dgl. abgedeckt. Auch hier sind Ablagerungen von Stoffen im Quellkörper unvermeidlich.

Die Erfindung hat sich die Aufgabe gestellt, eine Einrichtung der eingangs erwähnten Art in möglichst einfacher, leicht bedienbarer Weise unter Verwendung von billigen, leicht herstellbaren Teilen auszubilden, wobei das der Erde zuzuführende Wasser nicht direkt mit der Einrichtung in Berührung kommen soll.

Erfindungsgemäß wird dies nun dadurch erreicht, daß die Membranklemmringe ineinandergreifen und zwischen ihren Mantelflächen die Steuermembran geklemmt ist, die kappenförmig ausgebildet ist, wobei der innere Membranklemmring dem oberen Ende des Unterteiles zugeordnet ist und zumindest der äußere Membranklemmring der Abdeckung angehört, und daß eine den äußeren Membranklemmring koaxial fortsetzende Führungshülse für den Ventilkörper eine Durchtrittsöffnung für einen Bewässerungsschlauch aufweist, der zwischen dem Ventilkörper und dem durch eine Stellschraube gebildeten Widerlager quetschbar ist.

Durch die kappenförmige Steuermembran und die jeweils kurze Rohrabschnitte bildenden Membranklemmringe sind die Teile der erfindungsgemäßen Einrichtung in einfacher Weise aufeinandergesteckt. Die Beanspruchung der Steuermembran ist auf Grund ihrer kappenförmigen Ausbildung mit unterer Randeinspannung sehr gering. Da auch das Quetschventil nahezu störungsfrei arbeitet, weil der bewegliche Ventilkörper nicht mit Wasser in Berührung kommt und keine Ablagerungen auftreten können, ist eine lange Lebensdauer der Einrichtung gewährleistet. Ein Austausch des nach längerer Zeit seine Elastizität verlierenden Bewässerungsschlauches ist ebenfalls rasch möglich, da nur die das Widerlager bildende Stellschraube gelöst werden muß.

Für die Verwendung der Einrichtung wird der Unterteil mit dem insbesondere aus gebranntem Ton bestehenden porösen Hohlkörper mit Wasser gefüllt und verschlossen, und die Einrichtung dann so in das Erdreich in der Nähe der zu bewässernden Pflanze eingesetzt, daß der poröse Hohlkörper unterirdisch und zumindest die Führungshülse oberirdisch liegt. Der Bewässerungsschlauch wird durch die Durchbrechung der Führungshülse durchgeschoben und an einen höher angeordneten Wasservorrat angeschlossen. Zuletzt wird das Widerlager so justiert, daß der Ventilkörper den Schlauch gequetscht hält und der Wasserdurchtritt unterbunden ist. Die aus wenigen, einfach und billig herzustellenden Teilen bestehende Einrichtung ist damit ohne besondere Vorbereitungen unmittelbar einsatzbereit.

Die zu bewässernde Pflanze wird nun, sobald die Erdfeuchtigkeit einen bestimmten Betrag unterschritten hat, Wasser indirekt auch aus dem Unterteil saugen und dadurch einen Unterdruck erzeugen, der den Innenraum verkleinert, wobei die Steuermembran den in der Führungshülse angeordneten Ventilkörper vom Widerlager entfernt. Der gequetschte Schlauch wird freigegeben und das Wasser dem Erdreich zugeführt. Damit steigt dessen Feuchtigkeitsgehalt an und der im Unterteil bestehende Unterdruck, der mit zunehmender Bewässerung nicht mehr von den Saugkräften der Pflanze, sondern von der auf das Steuerelement wirkenden Rückstellkraft aufrechterhalten wird, saugt nunmehr die zuvor abgegebene Wassermenge in den Hohlkörper zurück. Sobald der ursprüngliche Flüssigkeitsstand wieder erreicht ist, hat sich die Steuermembran in ihre Ausgangsstellung zurückbewegt und der Ventilkörper den Bewässerungsschlauch wieder gequetscht, womit auch die Wasserzufuhr unterbrochen ist. Mit Absinken der Erdfeuchtigkeit wird schließlich wieder Wasser aus dem Unterteil gesaugt und der Bewässerungszyklus wieder begonnen. Eine eigene Rückstellfeder für die Steuermembran kann dabei erübrigt werden, wenn sie eine die Rückstellkraft bewirkende Eigensteife aufweist. Da sich durch das einstellbare Widerlager eine Vorspannung der Steuermembran erreichen läßt, läßt sich im Unterteil ein wählbarer Unterdruck erzeugen. Die Bewässerungszyklen und der Feuchtigkeitsgehalt der Pflanzenerde können so variiert und den bevorzugten Bedingungen der Pflanzen angepaßt werden, wobei weitere Einstellmöglichkeiten in der Veränderung des Abstandes zwischen dem Wasseraustrittsende des Bewässerungsschlauches und dem Unterteil, sowie in der Ausbildung eines Luftpolsters in der Abdeckung liegen. Dabei muß jedoch die Wasserfüllung auch bei tiefstem Wasserstand den Lufteintritt durch den Hohlkörper unterbinden.

Nachstehend wird nun die Erfindung anhand der Figuren der beiliegenden Zeichnung in einer bevorzugten Ausführung näher beschrieben, ohne darauf beschränkt zu sein.

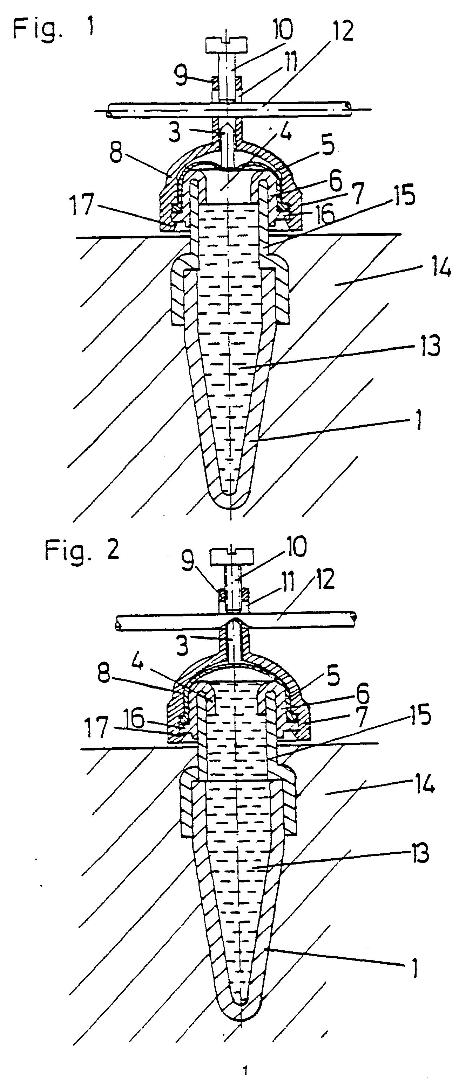

Die Figuren zeigen Längsschnitte durch eine erfindungsgemäße Einrichtung, und zwar Fig. 1 mit geöffnetem und Fig. 2 mit geschlossenem Quetschventil.

Die Einrichtung weist einen Unterteil 1, der aus einem porösen, insbesondere keramischen, kegelartigen Hohlkörper und einen aufgesetzten Rohrstutzen 15 besteht, und einen Oberteil in Form einer luftdicht abschließenden, abnehmbaren Abdeckung auf. Die kappenartige Abdeckung 8 ist mehrteilig ausgebildet und weist eine auf den Rohrstutzen 15 luftdicht aufgesetzte, doppelwandige Hülse 4 auf. An der Außenseite der doppelwandigen Hülse ist eine Umfangsrippe 16 angeordnet, die von nach innen weisenden Vorsprüngen 17 eines äußeren Membranklemmringes 7 hintergriffen wird. Der die Umfangsrippe 16 tragende Bereich der Hülse 4 bildet einen inneren Membranklemmring 6, wobei die beiden Ringe 6, 7 konzentrisch ineinandergreifend eine ebenfalls kappenartig ausgebildete, aus elastischem Material bestehende Steuermembran 5 klemmen.

Der äußere Membranklemmring 7 setzt sich mittig in einer hochstehenden Führungshülse 9 fort, die eine diametral sich erstreckende Durchbrechung 11 aufweist, durch die ein Bewässerungsschlauch 12 geführt ist. Das Austrittsende des Bewässerungsschlauches 12 liegt in der Nähe der zu bewässernden Pflanze bzw. Pflanzen, wobei der Abstand zur Führungshülse 9 beliebig gewählt werden kann. In das ein Innengewinde aufweisende freie Ende der Führungshülse 9 ist eine Stellschraube eingesetzt, die ein Widerlager 10 für den Bewässerungsschlauch 12 bildet. Von der Steuermembran 5 ragt in die Führungshülse 9 ein zylindrischer Ventilkörper 3, dessen Ende abgeschrägt ist, und der zusammen mit dem durch die Stellschraube gebildeten Widerlager 10 ein Quetschventil bildet, wobei Fig. 1 die geöffnete und Fig. 2 die gequetschte Stellung zeigt.

Zur Bewässerung der Pflanzen wird die im Wasser 13 gefüllte und dann luftdicht verschlossene Einrichtung so in die Erde 14 gesteckt, daß die Abdeckung 8 oberirdisch, der Unterteil 1 jedoch unterirdisch liegt. Das Widerlager 10 wird durch Verstellen der Schraube so eingestellt, daß der Schlauch 12 gequetscht und die Zufuhr des Wassers zur Pflanze unterbrochen ist, das von einem höher gelegenen Wasservorrat ausfließt. Die von den Pflanzenwurzeln im Erdreich 14 bewirkte Saugspannung überträgt sich über das den äußeren Luftzutritt in den Hohlkörper hindernde Wasser 13 auf die in der Abdeckung 8 eingesetzte Steuermembran 5 und bewegt diese durch den auftretenden Unterdruck nach unten. Dadurch öffnet sich der zwischen dem Ventilkörper 3 und dem Widerlager 10 gequetschte Schlauch 12 und Wasser fließt bzw. tropft am Schlauchende auf die Erde 14. Nach einer gewissen Feuchtigkeitsaufnahme 14 läßt die Saugspannung nach und die federnde Steuermembran 5 kehrt in die Ausgangsstellung zurück, wobei aus der Erde 14 ein Teil des über den Schlauch 12 zugeführten Wassers in den Unterteil 1 zurückgesaugt wird, sodaß der ursprüngliche Wasserstand wieder erreicht wird. Die Wasserzufuhr wird damit zwischen dem Ventilkörper 3 und dem Widerlager 10 wieder unterbrochen. Zur Veränderung bzw. Verzögerung des Öffnungsvorganges kann der Steuermembran 5 mittels der Stellschraube des Widerlagers 10 eine Vorspannung gegeben werden. Weiters kann der Öffnungs- bzw. Schließvorgang des Quetschventiles auch durch die Veränderung des Abstandes zwischen dem Austrittsende des Schlauches 12 und dem Unterteil 1 beeinflußt werden. Je größer dieser Abstand ist, je mehr Zeit benötigt das Wasser, um zum Unterteil 1 zu gelangen, in diesen einzudringen und die Saugspannung zu reduzieren. Da das ursprünglich in den Unterteil 1 eingefüllte Wasser 13 insgesamt nicht verbraucht wird, ist eine Nachfüllung unnötig. Da die poröse Wandung des Hohlkörpers in beiden Richtungen wechselweise durchflossen wird, werden Stoffe, die sich beim Eintritt des Wassers in den Unterteil 1 am Hohlkörper außen ablegen, von dem auf Grund der Saugwirkung der Pflanzen wieder austretenden Wasser abgespült, sodaß sich auch in Langzeitverwendung die Poren des Hohlkörpers nicht verschließen können.

Die Hülse 4 könnte auch einstückig am Rohrstutzen 15 vorgesehen sein, sodaß dessen oberes Ende den inneren Membranklemmring 6 bildet. Eine lösbare Verbindung zwischen den beiden Membranklemmringen 6, 7 kann beispielsweise durch Abänderung der Umfangsrippe 16 und der Vorsprünge 17 in der Art eines Bajonettverschlusses vorgesehen werden.

**Patentansprüche**

1. Bewässerungseinrichtung für Pflanzen, mit einem in die Erde (14) einzusetzenden, eine Füllöffnung für Wasser (13) aufweisenden, wasserdurchlässigen Unterteil (1), der einen porösen Hohlkörper umfaßt, mit einem luftundurchlässigen Oberteil, der durch eine vom Unterteil (1) abnehmbare, luftdichte Abdeckung (8) der Füllöffnung gebildet ist, und der einer in Abhängigkeit vom Wassergehalt der Erde (14) arbeitenden Ventilkörper (3) sowie eine Steuermembran (5) enthält, die zwischen Ringen (6, 7) dichtend geklemmt ist, wobei sich zwischen dem von der Steuermembran (5) beaufschlagten Ventilkörper (3), der im Oberteil geführt ist, und einem mit dem Oberteil verbundenen Widerlager (10) der Durchflußquerschnitt einer Bewässerungsleitung vergrößert, wenn Wasser (13) aus dem Unterteil (1) in die Erde (14) austritt, und verkleinert, wenn Wasser (13) aus der Erde (14) in den Unterteil (1) eintritt, dadurch gekennzeichnet, daß die Membranklemmringe (6, 7) ineinandergreifen und zwischen ihren Mantelflächen die Steuermembran (5) geklemmt ist, die kappenförmig ausgebildet ist, wobei der innere Membranklemmring (6) dem oberen Ende des Unterteiles (1) zugeordnet ist und zumindest der äußere Membranklemmring (7) der Abdeckung (8) angehört, und daß eine den äußeren Membranklemmring (7) koaxial fortsetzende Führungshülse (9) für den Ventilkörper (3) eine Durchtrittsöffnung (11) für einen Bewässerungsschlauch (12) aufweist, der zwischen dem Ventilkörper (3) und dem durch eine Stellschraube gebildeten Widerlager (10) quetschbar ist.

2. Bewässerungseinrichtung nach Anspruch 1, dadurch gekennzeichnet, daß auch der innere Membranklemmring (6) der Abdeckung (8) angehört, und auf die Füllöffnung des Unterteiles (1) aufgesetzt ist.

3. Bewässerungseinrichtung nach Anspruch 1 oder 2, dadurch gekennzeichnet, daß zwischen den beiden Membranklemmringen (6, 7) der Abdeckung (8) eine lösbare Verbindung vorgesehen ist.

4. Bewässerungseinrichtung nach einem der Ansprüche 1 bis 3, dadurch gekennzeichnet, daß die Membran (5) eine die Rückstellkraft bewirkende Eigensteife aufweist.

**Claims**

1. A watering device for plants, comprising a lower portion (1) which is to be inserted into the earth (14) and which has a filling opening (13) for water and which is pervious to water and which includes a porous hollow body, an upper portion which is impermeable to air and which is formed by an air-tight cover (8) for the filling opening, which is removable from the lower portion (1), and includes a valve body (3) operating in dependence on the water content of the earth (14) as well as a control diaphragm (5) which is sealingly clamped between rings (6, 7), wherein between the valve body (3) which is acted upon by the control diaphragm (3) and which is guided in the upper portion, and a support (10) which is connected to the upper portion, the through-flow cross-section of a watering conduit is increased when water (13) issues from the lower portion (1) into the earth (14) and reduced when water (13) passes out of the earth (14) into the lower portion (1) characterised in that the diaphragm clamping rings (6, 7) engage into each other and the control diaphragm (5) which is of a cap-like configuration is clamped between the peripheral surfaces of the rings, wherein the inner diaphragm clamping ring (6) is associated with the upper end of the lower portion (1) and at least the outer diaphragm clamping ring (7) belongs to the cover (8), and that a guide sleeve (9) for the valve body (3), which guide sleeve coaxially extends the outer diaphragm clamping ring (7), has a through opening (11) for a watering hose (12) to pass therethrough, which watering hose can be squeezed between the valve body (3) and the support (10) which is formed by an adjusting screw.

2. A watering device according to claim 1 characterised in that the inner diaphragm clamping ring (6) also belongs to the cover (8) and is fitted on to the filling opening of the lower portion (1).

3. A watering device according to claim 1 or claim 2 characterised in that a releasable connection is provided between the two diaphragm clamping rings (6, 7) of the cover (8).

4. A watering device according to one of claims 1 to 3 characterised in that the diaphragm (5) has inherent rigidity which produces the return force.

**Revendications**

1. Dispositif d'arrosage de plantes comportant une partie inférieure perméable (1) munie d'une cavité de remplissage en eau (13) et apte à être installée dans la terre (14), ladite partie inférieure (1) comprenant un corps creux poreux, et une partie supérieure imperméable à l'air formée par un couvercle étanche à l'air (8) pour la cavité de remplissage et apte à être séparée de la partie inférieure (1), ladite partie supérieure comprenant un corps de soupape (3) fonctionnant en fonction de la teneur en eau de la terre (14), et une membrane de commande (5) serrée de façon étanche entre des bagues (6, 7), étant précisé que la section d'écoulement d'une conduite d'arrosage augmente entre le corps de soupape (3) guidé dans la partie supérieure et sollicité par la membrane de commandé (5), et une butée (10) reliée à la partie supérieure, lorsque l'eau (13) sort de la partie inférieure (1) pour pénétrer dans la terre (14) et diminue lorsque l'eau (13) sort de la terre (14) pour pénétrer dans la partie inférieure (1), caractérisé en ce que les bagues (6, 7) de serrage de la membrane s'emboîtent l'une dans l'autre alors que la membrane de commande (5), qui a la forme d'un capuchon, est serrée entre leurs surfaces latérales, la bague intérieure (6) de serrage de la membrane étant située à l'extrémité supérieure de la partie inférieure (1) tandis qu'au moins la bague extérieure (7) de serrage de la membrane appartient au couvercle (8) et en ce qu'une douille de guidage (9) prolongeant coaxialement la bague extérieure (7) de serrage de la membrane et destinée au corps de soupape (3) présente une ouverture de passage (11) pour un tuyau d'arrosage (12) apte à être écrasé entre le corps de soupape (3) et la butée (10) formée par une vis de réglage.

2. Dispositif d'arrosage selon la revendication 1, caractérisé en ce que la bague intérieure (6) de serrage de la membrane appartient elle aussi au couvercle (8) et est posée sur la cavité de remplissage de la partie inférieure (1).

3. Dispositif d'arrosage selon la revendication 1 ou 2, caractérisé en ce qu'une jonction amovible est prévue entre les deux bagues (6, 7) de serrage de la membrane du couvercle (8).

4. Dispositif d'arrosage selon l'une des revendications 1 à 3, caractérisé en ce que la membrane (5) présente une raideur propre produisant la force de rappel.

Fig. 1

Fig. 2